# EUROPEAN PATENT SPECIFICATION

(11) **EP 1 074 951 B1**
(45) Date of publication and mention of the grant of the patent: **27.08.2003**
(21) Application number: 00302620.0
(22) Date of filing: 29.03.2000
(51) Int. Cl.: G07F 7/10

(54) **Settlement system and card**
Begleichungssystem und Karte
Système de réglement et carte associée

(30) Priority: 03.08.1999 JP 22015899
(43) Date of publication of application: 07.02.2001
(73) Proprietor: FUJITSU LIMITED, Kawasaki-shi, Kanagawa 211-8588 (JP)
(72) Inventor: Kumamoto, Kazuhiro, Nakahara-ku, Kawasaki-shi, Kanagawa 211 (JP)
(74) Representative: Stebbing, Timothy Charles

(56) References cited:
- EP-A- 0 337 794
- EP-A- 0 775 990
- EP-A- 0 829 830
- FR-A- 2 589 268
- FR-A- 2 769 736
- FR-A- 2 783 623

## Description

The present invention relates to a process enabling settlement of business accounts among a host, terminals, and cards. More particularly, this invention is concerned with a process having a facility of identifying the person concerned who wants to use a smart card as an electronic money card.

In recent years, systems enabling use of credit cards or cash cards issued from financial institutions have prevailed. For guaranteeing security of the card, a card user is asked to input a password number. The password number is checked or collated with stored data to see if the card-carrying person is authorised to use it. Even if the card is lost or stolen, if the password number remains unrevealed, illegal use can be prevented.

In future, electronic settlement, obviating the use of notes and coins, will become available. One form of electronic settlement is an electronic money system enabling face-to-face settlement between individuals in the same manner as settlement in cash. Electronic money is made available with an IC card referred to as a smart card. The smart card is used to give or get electronic money, and can be widely circulated like cash without the intervention of banks. The IC card has a data memory and a microcomputer realized in the form of a chip. Sum information indicating an amount of electronic money is stored in the data memory. A program enabling the card to provide electronic money is stored in the microcomputer.

Some smart cards are provided with a lock facility in order to cope with illegal use. This facility can be set arbitrarily by a user. For example, once a smart card is locked, every time the smart card is used, the input of a password number is requested irrespective of the sum to be spent.

However, since the smart card is intended to facilitate shopping, the use frequency of the smart card is so high that it is discouraging to force a user to input a password number.

A person who carries a locked card for the sake of security must input a password number so as to unlock the card on every shopping trip. Even when the shopping is worth only a little, input of the password number is requested. This is annoying for a user of electronic money, and rather impractical.

It can be said that input of a password number is preferably not required for use of a card. Then, if the card is lost or stolen, unless the fact is reported to a card issuer and a banking account is closed (it normally takes much time to complete this procedure), the card can be used without any restriction. Some countermeasure must be taken. For example, according to a known method, a host manages card users' business limits. Every time a user uses his/her card to, for example, do shopping, the user communicates with the host so as to check his/her business limit.

However, the business limit normally indicates an upper limit of a sum spent during one shopping trip. If shopping whose sum falls within the limit is repeated several times, there is substantially no limit. From this viewpoint, security is compromised. Moreover, an authorized user himself/herself will find it inconvenient that the user cannot do shopping above the limit. To avoid a security risk, there is no countermeasure other than obliging every user to input a password number every time a card is used and thus identifying the user.

Accordingly, it is desirable to make it possible to minimize the damage of loss or theft of a card, and improve the convenience of authorized users.

EP-A-0 829 830 discloses a process according to the preamble of accompanying claim 1.

In this process, the permissible cumulative limit information is set by the card issuing institution at the time of issuing the card.

FR-A-27769736 discloses the pre-registration by a user of a threshold value for determining when to demand a code from a user in a settlement process. The threshold value refers to the amount of a single transaction being performed.

According to the present invention, there is provided a process using a card, an external terminal and a host, in which the card at least specifying a user is used for settlement between the external terminal and the host, the process comprising:
- storing an entered amount of electronic money in a storage unit included in said card;
- storing cumulative spent sum information and permissible cumulative limit information in a storage unit; and
- calculating in a control unit included in one of said card, external terminal and host, the total of a sum spent this time and said cumulative spent sum, and, when the total exceeds said permissible cumulative limit, requesting input of a password;
characterised by :
- setting said permissible cumulative limit information within said entered amount of electronic money; and
- using said external terminal, allowing the user to reset said permissible cumulative limit information.

Thus, in the present invention, there is provided a settlement process in which a card at least specifying a user is used to facilitate settlement between an external terminal and a host. Cumulative spent sum information is stored in a storage unit included in any of the card, external terminal, and host. Permissible cumulative limit information is stored in a storage unit included in any of the card, external terminal, and host. A calculation is performed of the sum total of a sum spent this time and the cumulative spent sum. When the sum total exceeds the permissible cumulative limit, input of a password ("password symbol", such as a combination of letters and/or digits), is required.

Reference will now be made, by way of example, to the accompanying drawings, wherein:
Fig. 1 is a schematic diagram of an electronic money system using a smart card;
Fig. 2 is a flowchart describing setting of a permissible cumulative limit in a smart card;
Fig. 3 is a flowchart describing changing of a permissible cumulative limit set in a smart card;
Fig. 4 is a flowchart indicating changing of a permissible cumulative limit set in a smart card using a personal computer;
Fig. 5 shows a practical example of the contents of a data money in a smart card in accordance with the present invention, indicating whether input of a password number is requested; and
Fig. 6 is a flowchart describing execution of a facility of checking a permissible cumulative limit according to the present invention.

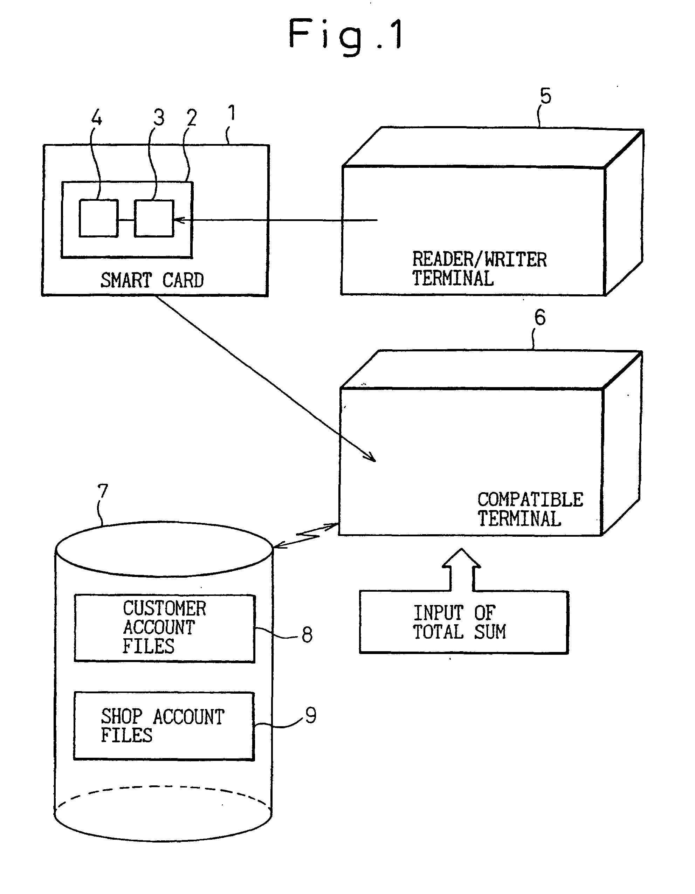

Referring to Fig. 1, an embodiment of the present invention will be described. In this embodiment, an electronic money system is used as an example of a system for implementray the process of the present invention.

A smart card (electronic money card) 1 is an IC card formed using a normally prevailing cash card or credit card as a base and having an IC module 2 installed in the base. The IC module 2 has a one-chip microcomputer mounted on a substrate with external contact pins and is sealed using a resin. The one-chip microcomputer is implemented as a single chip in which, for example, an 8-bit microcomputer 3 and a data memory 4 (nonvolatile programmable memory, for example, E²PROM) are installed.

Data based on which a user is specified and information of electronic monetary value or so-called electronic money are stored in the data memory 4.

The IC module 2 works as the heart of the smart card 1. Programs directing the built-in microcomputer 3 are stored in the IC module. As far as the IC card is concerned, it is impossible to directly and externally access the data memory 4 to retrieve the contents of the data memory 4. The programs installed in the one-chip microcomputer check if a predetermined procedure has been followed and collate an input specific code with internal data. Unless a user is permitted, the user cannot access the data memory. The IC card guarantees high security because it cannot be used illegally and data cannot be stolen or modified.

Next, actions performed by the smart card 1 will be described. The microcomputer 3 existing in the smart card 1 acts when a voltage is applied to a Vcc pin out of the external contact pins of the card through a reader/writer terminal 5, and a clock is supplied to a CLK pin. Information is input or output as serial data through an I/O pin. The reader/writer terminal 5 may be a smart card issuing terminal installed in any financial institution or a portable data change terminal (wallet). The reader/writer terminal 5 includes a processing unit for handling an IC card, a contact unit for transferring signals to or from the card, a display unit, and a key unit.

A smart card owner inserts or brings the smart card 1 into or into contact with the reader/writer terminal 5. The owner then inputs his/her password number using the keys of the reader/writer terminal 5. After access is permitted by collating the password number with internal data, an amount of money to be spent as electronic money is set (entered) or changed.

Next, a description will be made of a situation in which an owner uses the smart card 1 to spend electronic money, for example, an owner uses the smart card 1 to do shopping. Assume that a smart card-compatible terminal 6 is installed at a shop. The compatible terminal 6 may be a POS station, and consists of, like the reader/writer terminal 5, a processing unit for handling an IC card, a contact unit for transferring signals to or from the card, a display unit, and a key unit. The compatible terminal 6 is connected online to a financial institution so that a sum spent on shopping can be paid in settlement. The financial institution issues and manages a card for making electronic money available.

When a smart card user wants to pay a sum using the smart card 1 instead of in cash, the user inserts or puts the smart card 1 into, or into contact with, the compatible terminal 6. The sum total spent on shopping and input at the compatible terminal 6 is paid in settlement using the smart card 1. Namely, the sum total spent on shopping is subtracted from the amount of electronic money stored in the data memory 4 in the smart card 1.

In the present embodiment, the reader/writer terminal 5 and compatible terminal 6 are independent of each other. Alternatively, for example, the compatible terminal 6 may be provided with the capability of the reader/writer terminal 5, so that one terminal may realize two facilities.

The compatible terminal 6 is connected to a host 7 installed in the financial institution. The host 7 in the financial institution has customer account files 8 and shop account files 9.

Assume that a user wants to store thirty thousand yen's worth of electronic money in the data memory 4 in the smart card 1. In this case, thirty thousand yen is withdrawn from a customer account file (equivalent to a normal deposit file) 8 of the user. The thirty thousand yen's worth of electronic money is entered in the smart card 1 through the terminal (the compatible terminal 6 may be used) installed in a prescribed place.

Moreover, a sum total subtracted from the amount of electronic money stored in the user's smart card 1 is transmitted to the host 7 according to predetermined timing, and then written in a shop account file 9.

In the present embodiment, the customer account files 8 and shop account files 9 are stored in the same host. Alternatively, the customer account files 8 and shop account files 9 may be stored in different hosts.

Moreover, a card issuer company may manage data of electronic money, access the host 7 in a financial institution according to predetermined timing, and renew account files.

If the smart card 1 is lost or stolen, an entered amount of electronic money stored in the smart card 1 may be spent. To prevent this, the smart card 1 has a lock facility. When the smart card 1 is locked, unless a password symbol is input in order to identify a person concerned at every shopping, the smart card cannot be used irrespective of a sum. The "password symbol" may comprise a combination of keys provided on the terminal 6.

In this embodiment of the present invention, a permissible cumulative limit can be set within an entered amount of electronic money stored in the smart card 1. As long as a sum spent on shopping falls within the permissible cumulative limit, a user can pay the sum without the necessity of inputting his/her password symbol. In contrast, when a sum falls within the entered amount of electronic money but exceeds the permissible cumulative limit, input of the user's password symbol is requested. Otherwise, payment cannot be achieved.

Moreover, an area in which a permissible cumulative limit can be set is defined in addition to an area, in which an entered amount of electronic money is set, in the data memory 4 in the smart card 1. The microcomputer 3 is programmed to have a facility of checking a cumulative spent sum implemented therein.

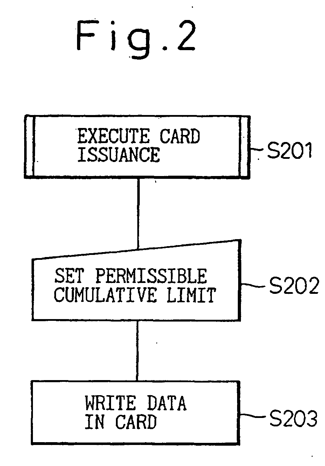

Referring to Fig. 2, a procedure for setting a permissible cumulative limit will be described below. Fig. 2 is concerned with a situation in which the reader/writer terminal 5 shown in Fig. 1 serves as a terminal for issuing the smart card 1 and a permissible cumulative limit is set at the time of issuance of a card.

First, smart card issuance is executed (S201). An amount of electronic money limit to be entered in the smart card 1 is input at the terminal 5, and a permissible cumulative limit is input within the entered amount of electronic money limit (S202). The terminal 5 writes in the data memory 4 the input entered amount of electronic money and permissible cumulative limit (S203). Thus, setting the permissible cumulative limit in the smart card 1 is completed.

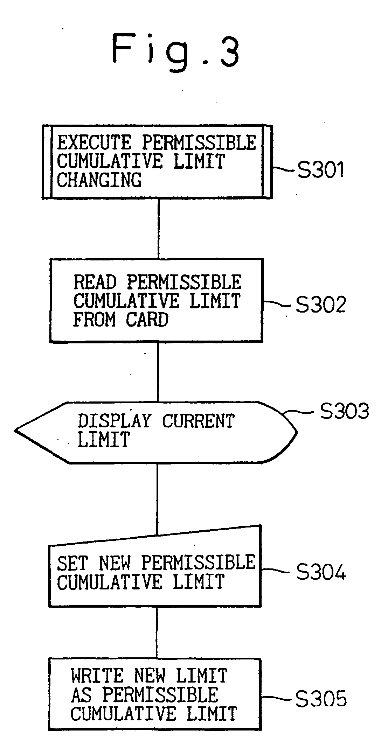

Next, a procedure of changing a permissible cumulative limit at the reader/writer terminal 5 shown in Fig. 1 will be described with reference to Fig. 3. The smart card 1 is inserted into, or brought into contact with, the reader/writer terminal 5. A changing mode is selected and the procedure of changing is started (S301). The reader/writer terminal 5 reads a current permissible cumulative limit from the data memory 4 in the smart card 1 (S302), and displays the current permissible cumulative limit in the display unit of the reader/writer terminal 5 (S303).

When the current permissible cumulative limit must be changed, the displayed permissible cumulative limit is changed to a new permissible cumulative limit using the keys of the reader/writer terminal 5 (S304). The new permissible cumulative limit is written as the permissible cumulative limit in the data memory in the smart card 1 (S305). Thus, the changing is completed.

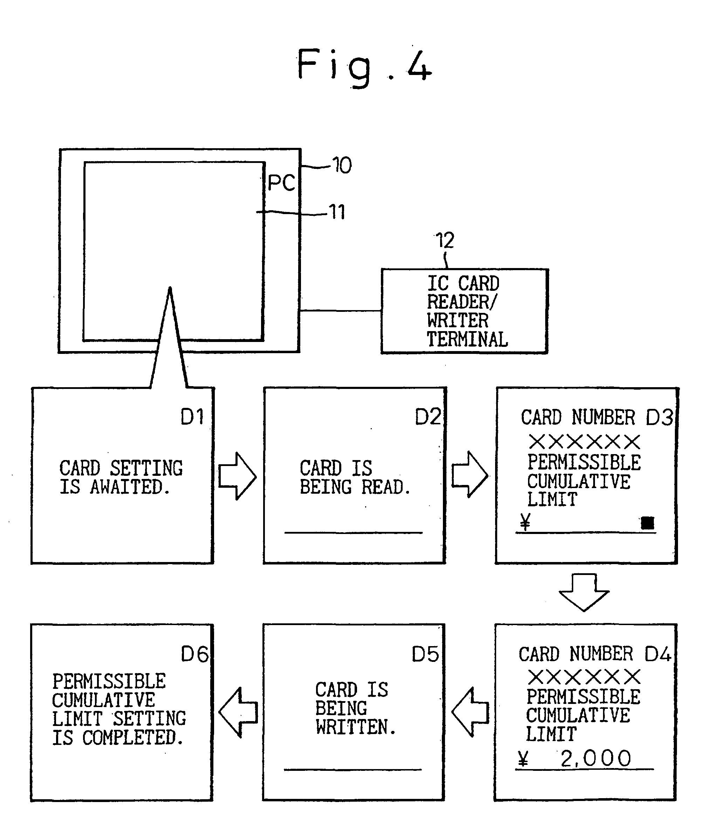

Referring to Fig. 4, a description will be made of a procedure of setting a permissible cumulative limit using a personal computer 10 as the terminal 5 shown in Fig. 1. In Fig. 4, the procedure is described with emphasis put on the display screen 11 of the personal computer 10. An IC card reader/writer terminal 12 is connected to the personal computer 10.

When a permissible cumulative limit setting mode is selected, a message "Card setting is awaited." appears (D1). The smart card 1 is then set in the IC card reader/writer terminal 12. A message "Card is being read." appears. Permissible cumulative limit setting is then started (D2). When access to the smart card 1 is permitted, a card number of the smart card 1 is displayed. If no current permissible cumulative limit is set, a blank or 0 is displayed as the sum (D3).

When the current permissible cumulative limit must be changed, a new permissible cumulative limit, for example, ¥2000 is input using the ten-key pad. The sum displayed on the screen is checked, and an Enter key is pressed (D4). Writing the sum in the data memory 4 in the smart card 1 is then started. A message "Card is being written." appears on the screen (D5). Thereafter, when writing is completed, a message "Permissible cumulative limit setting is completed." appears (D6).

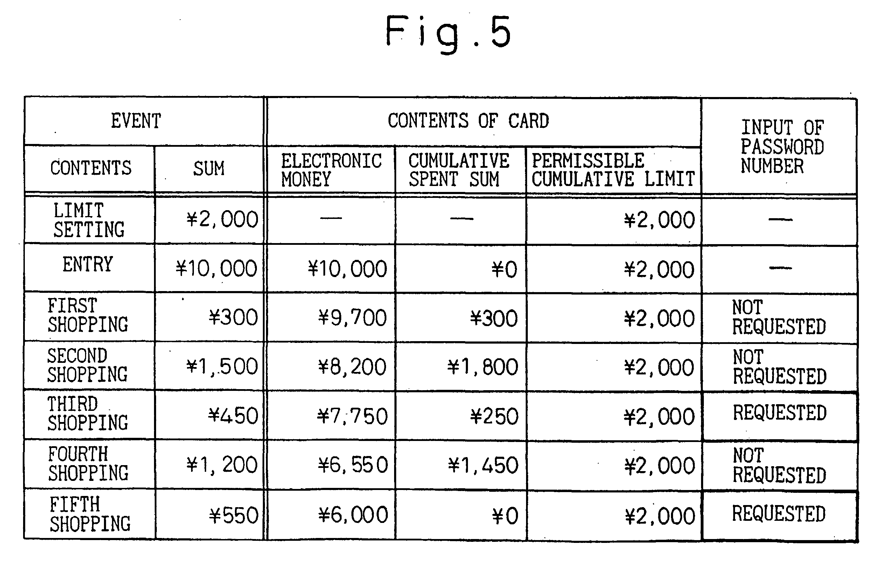

Fig. 5 shows a practical example of data stored in the smart card 1 and checked by the microcomputer 3. It is described that, after a permissible cumulative limit, as a constituent feature of the present invention, is set, if the permissible cumulative limit is exceeded, the microcomputer 3 prompts input of a password symbol.

In Fig. 5, actions performed on the smart card 1 are specified in the "event" column. Namely, a sum set as a permissible cumulative limit, an amount of electronic money entered, and sums spent on shopping are specified therein. In the "content of card" column of Fig. 5, an amount of electronic money remaining in the card and a cumulative spent sum resulting from shopping are specified. Both the remaining sum and cumulative spent sum are sums stored in the data memory 4. In the "input of password number" column, it is specified whether the microcomputer 3 gives an instruction indicating that input of a password symbol is needed. Entering an amount of electronic money in the smart card 1 is performed at the reader/writer terminal 5 shown in Fig. 1. Herein, ten thousand yen is entered, and two thousand yen is set as a permissible cumulative limit. A sum spent on shopping means a sum total spent during one shopping trip. In Fig. 5, five shopping trips are made.

When ten thousand yen is entered in the smart card 1, ten thousand yen is inputted as an amount of electronic money in the data memory, that is, as a sum remaining in the card. This means that the card can be used to spend ten thousand yen's worth of electronic money. Since the card has not been used to spend electronic money, 0 is specified as a cumulative spent sum. For paying three hundred yen for the first shopping, the smart card 1 is brought into contact with the compatible terminal 6 shown in Fig. 1. The sum total of three hundred yen spent on shopping is transmitted from the compatible terminal 6 to the microcomputer 3 in the smart card 1. The microcomputer 3 judges that the sum required for payment falls within the permissible cumulative limit set in the card. The microcomputer 3 does not therefore request input of a password symbol but calculates a cumulative spent sum (0+300=300). The microcomputer 3 then stores three hundred yen as a cumulative spent sum in the data memory 4, and terminates settlement in electronic money.

Assume that one thousand five hundred yen must be paid for the second shopping. In this case, similarly to the case of the first shopping, a cumulative spent sum is calculated (300+1500=1800). Since the permissible cumulative limit is set to two thousand yen, the cumulative spent sum falls within the permissible cumulative limit set in the card. Input of a password symbol is therefore not requested. One thousand eight hundred yen is then stored as a cumulative spent sum in place of three hundred yen. Settlement in electronic money is then terminated. Eight thousand two hundred yen is then stored as an amount of remaining electronic money in the data memory 4.

Assume that four hundred fifty yen must be paid for the third shopping. Four hundred fifty yen is input as a total spent sum at the compatible terminal 6. The microcomputer 3 in turn reads the current cumulative spent sum of one thousand eight hundred yen from the data memory 4, and calculates a new cumulative spent sum using the current cumulative spent sum and the input total spent sum of four hundred fifty yen (1800+450=2250). The new cumulative spent sum of two thousand two hundred and fifty yen exceeds the permissible cumulative limit of two thousand yen. The microcomputer 3 therefore notifies a user of the necessity of inputting his/her password symbol at the compatible terminal 6. The input request may be achieved using the display unit of the compatible terminal 6 or by sounding an alarm. When the user intends to pay the sum in electronic money, the user must input his/her password symbol. The microcomputer 3 judges whether the password symbol is appropriate. If the password symbol is appropriate, since the current cumulative spent sum including the sum total spent this time exceeds the permissible cumulative limit of two thousand yen, the microcomputer 3 solves an expression of 2250-2000=250. A sum by which two thousand yen is exceeded, that is, two hundred fifty yen is stored as a new cumulative spent sum in place of the previous data of one thousand eight hundred yen. Incidentally, the permissible cumulative sum set in the card is still two thousand yen.

One thousand two hundred yen must be paid for the fourth shopping. A new cumulative spent sum is calculated to be one thousand four hundred and fifty yen (250+1200=1450). The new cumulative spent sum does not exceed the permissible cumulative limit. Input of a password symbol is therefore not requested. The new cumulative spent sum of one thousand four hundred and fifty yen is then stored as the cumulative spent sum, and six thousand five hundred and fifty yen is stored as the amount of electronic money.

For the fifth shopping, five hundred fifty yen must be paid. The cumulative spent sum (1450+550=2000) becomes equal to the permissible cumulative limit. 0 (2000-2000=0) is then specified as a new cumulative spent sum. At this time, input of a password symbol is requested. When a user intends to pay the sum in electronic money, the user must input his/her password symbol. If the microcomputer 3 judges that the password symbol is appropriate, payment in electronic money is carried out. The new cumulative spent sum of zero yen is then stored as the cumulative spent sum in place of one thousand four hundred and fifty yen. Furthermore, two thousand yen is specified as the permissible cumulative limit. The same procedure is repeated for payment until the electronic money in the card runs out. Even when each payment is equal to or smaller than the permissible cumulative limit, if the cumulative spent sum exceeds the permissible cumulative limit of two thousand yen, input of a password symbol is requested in order to identify a person concerned.

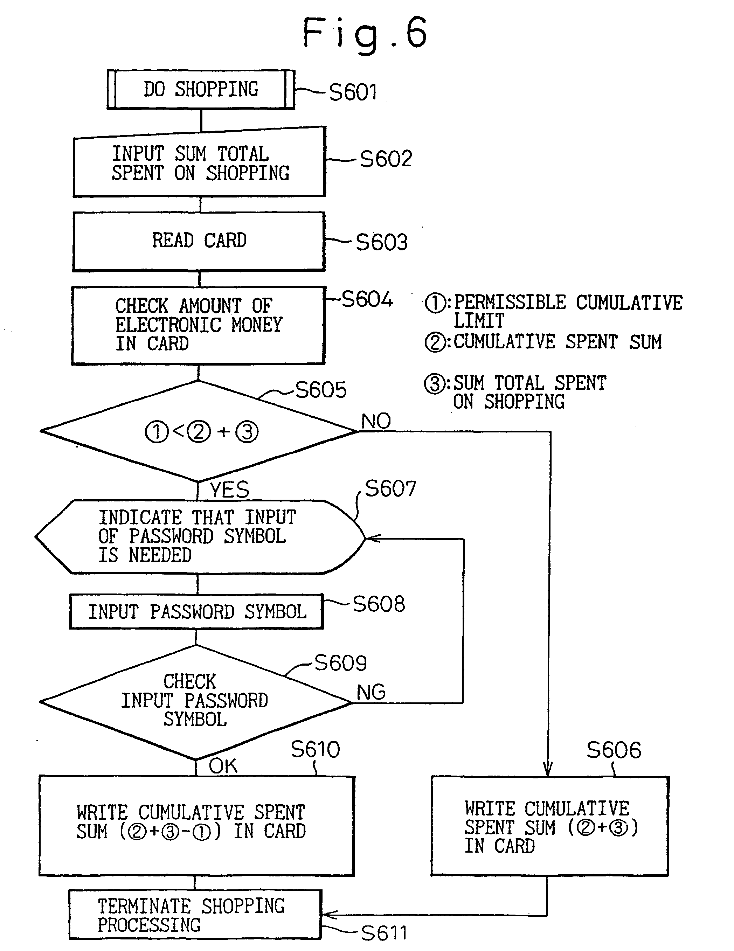

Next, a facility of checking a cumulative spent sum implemented in the microcomputer 3 of the smart card 1 will be described with reference to the flowchart of Fig. 6 on the assumption that a smart card user pays for shopping. In the drawing, ① denotes a permissible cumulative limit, ② denotes a cumulative spent sum, and ③ denotes a sum total spent during one shopping trip. When it says "STORED IN CARD," it means that data is stored in the data memory 4 in the smart card 1.

A user sets the smart card 1 in the compatible terminal 6 at a shop so as to pay for shopping. Payment in electronic money is then started (S601). When a sum total spent on shopping is input at the compatible terminal 6 (S602), the compatible terminal 6 reads data from the smart card 1 (S603). The compatible terminal 6 checks an amount of remaining electronic money read from the data memory 4 in the smart card 1 (S604). The microcomputer 3 in the smart card 1 receives the sum total spent on shopping from the compatible terminal 6.

Thereafter, it is judged whether the total of the sum total ③ spent on shopping 1 and the cumulative spent sum ② exceeds the permissible cumulative limit ① set in the card 1 (S605). At this time, the judgment is made from the sum total ③ spent on shopping and input from the compatible terminal 6, the current cumulative spent sum ② read from the data memory 4, and the permissible cumulative limit ① set in the card 1. As long as the total does not exceeds the permissible cumulative limit set in the card, the card can be used to spend electronic money. The microcomputer 3 then stores the total of the cumulative spent sum ② and the sum total spent on shopping ③ in the data memory 4 in the smart card 1 in place of the current cumulative spent sum (S606).

If the total exceeds the permissible cumulative limit ① set in the card 1, payment in electronic money cannot be continued. The microcomputer 3 instructs the compatible terminal 6 to indicate that input of a password symbol is needed (S607). The smart card user may suspend payment in electronic money. Otherwise, the user may re-set a permissible cumulative limit and pay the sum total. For making payment without any change in the permissible cumulative limit, as shown in Fig. 5, the user must input his/her password symbol (S608). The microcomputer 3 then checks to see if the input password symbol is appropriate (S609). If the results of checking demonstrate that the password symbol is inappropriate, it is instructed to indicate that input of a password symbol is needed (S607). If it is judged that the password symbol is appropriate, payment of the sum total in electronic money is permitted. In this case, the microcomputer 3 calculates a new cumulative spent sum (S610). Specifically, the new cumulative spent sum is calculated according to an expression of (new cumulative spent sum) = (cumulative spent sum ②) + (sum total ③ spent on shopping) - (permissible cumulative limit ① set in the card). The calculated new cumulative spent sum is then stored in the data memory 4 in the smart card 1 in place of the currently stored cumulative spent sum.

The microcomputer 3 stores the amount of electronic money remaining in the card, which is calculated by subtracting the sum total ③ spent on shopping this time from the amount of electronic money in the card, in the data memory 4. Thus, shopping processing is terminated (S611). Even when the sum total spent during one shopping trip largely exceeds the permissible cumulative limit, as long as the sum total does not exceed the amount of electronic money remaining in the card, payment in electronic money is permitted under the condition that a password symbol should be input.

In the aforesaid embodiment, every time the cumulative spent sum exceeds the permissible cumulative limit, a new cumulative spent sum is calculated and stored in the memory. When a total calculated according to (cumulative spent sum ②) + (sum total ③ spent on shopping) exceeds the permissible cumulative limit, the cumulative spent sum stored in the memory may be reset instead of calculating the new cumulative spent sum.

Referring to Fig. 5, the cumulative spent sum calculated after payment for the third shopping is two thousand two hundred and fifty yen. The microcomputer 3 instructs to indicate that input of a password symbol is needed.

In the aforesaid embodiment, the microcomputer 3 calculates a new cumulative spent sum. However, the calculation may not be carried out but the cumulative spent sum in the memory 4 in the card 1 may be reset. According to the aforesaid embodiment, two hundred fifty yen is stored. In this case, 0 is stored. Consequently, one thousand two hundred yen is stored as the cumulative spent sum associated with the fourth shopping in the memory 4. Input of a password symbol is not requested.

When five hundred fifty yen is paid for the fifth shopping, the cumulative spent sum comes to one thousand seven hundred and fifty yen. However, this sum falls below the permissible cumulative limit of two thousand yen. Input of a password symbol is not requested. In other words, when the cumulative spent sum exceeds the permissible cumulative limit, the cumulative spent sum is reset instead of calculation of a new cumulative spent sum. The new cumulative spent sum is therefore not added to the sum total spent on the next shopping.

In this case, calculation of a new cumulative spent sum can be omitted. A program directing the built-in microcomputer becomes simpler.

Next, another embodiment of the present invention will be described.

In the aforesaid embodiment, cumulative spent sum information and permissible cumulative limit information are stored in the data memory 4 in the smart card 1. When the microcomputer in the smart card 1 acquires spent sum information, for example, information of a sum total spent on shopping, it calculates a total according to (cumulative spent sum ②) + (sum total ③ spent on shopping). If the total sum exceeds the permissible cumulative limit, the microcomputer calculates a new cumulative spent sum and instructs input of a password symbol.

The smart card 1 is provided with a transmitter/receiver for receiving information from an external terminal that is the reader/writer terminal 5 or compatible terminal 6, or sending information to the external terminal. However, cumulative spent sum information and permissible cumulative limit information need not be stored in the data memory 4 in the smart card 1 but stored in, for example, an external terminal other than the smart card. Nevertheless, the microcomputer in the smart card 1 can run a password checking facility as described in the flowchart of Fig. 6.

Moreover, another system is known in which a smart card with a built-in microcomputer is not used but a cash card having a magnetic stripe is used to do shopping. A host in a bank is accessed in order to pay a sum total in settlement at every shopping. In this kind of system, it is hardly possible to provide a card itself with a checking facility.

In another embodiment, cumulative spent sum information and permissible cumulative limit information may be stored in memories in both the external terminal, for example, the reader/writer terminal 5 or compatible terminal 6 and the host, or in a memory in either the external terminal or host. Furthermore, the external terminals include a terminal compatible with a POS system and a terminal installed in a financial institution.

Moreover, when a total calculated according to (cumulative spent sum 2) + (sum total 3) exceeds a permissible cumulative limit, requesting input of a password symbol may not be by the microcomputer in the smart card 1, alternatively it may be by the external terminal or the host may instruct input of a password symbol.

In this case, the storage capacity of a memory in a smart card can be reduced and a program directing a built-in microcomputer can be simplified. Since a permissible cumulative limit can be set and a person concerned can be identified, consequently, the security of the smart card can be improved and the usable range thereof can be expanded. Moreover, even when the present embodiment is implemented in a system enabling settlement using a cash card, users' convenience can be improved and security can be intensified.

The embodiments of the present invention have been described by taking a system of a closed loop type for instance. The present invention can be applied to systems of an open loop type. Specifically, the compatible terminal 6 is a reader/writer terminal (wallet). A smart card is inserted directly to a reader/writer terminal owned by another person. When electronic money is transferred to another person, the checking facility is actuated for checking a permissible cumulative limit. Input of a password symbol is requested in order to identify a person concerned. In this case, the reader/writer terminal is provided with a display unit and alarm unit for informing a user of a request for input of a password symbol.

Moreover, the embodiments of the present invention have been described on the assumption that information is transferred via the external contact pins of a card. The present invention can be applied to a mode in which a medium such as light is used to transfer information with the card not in contact with any terminal. In this case, the card must be provided with a power supply such as a paper cell.

According to the present invention, a permissible cumulative limit can be set in a data memory in a smart card. A microcomputer in the smart card checks a cumulative spent sum. Every time the cumulative spent sum exceeds the permissible cumulative limit, the user is requested to input a password symbol. Even if the smart card is lost or stolen and then used, as long as the cumulative spent sum falls within the permissible cumulative limit and a password symbol is not compromised, the damage can be minimized. Moreover, when the permissible cumulative limit is set to 0, the same advantage as that provided by a lock facility, for preventing theft of a card, can be exerted.

Furthermore, when the permissible cumulative limit is set properly, as long as the smart card is used to pay a small sum falling below the permissible cumulative limit, input of a password symbol is not always needed. Thus, the smart card can be easily used to spend electronic money.

Moreover, for example, when a person asks another person to do some shopping for him/her, if the permissible cumulative limit to be stored in the smart card is set properly, the person can allow the another person to use the smart card. There is no danger that a larger amount of electronic money, than an amount the person intends, is spent.

Although the above description and the following claims refer to a "card", the present invention is not restricted to use with a settlement medium having a card shape. The invention may be applied to media of any shape or form including buttons, badges, clips, plug-in devices for personal organisers, mobile phones or pocket computers, and so forth.

## Claims

1. A process using a card, an external terminal and a host, in which the card at least specifying a user is used for settlement between the external terminal and the host, the process comprising:
- storing an entered amount of electronic money in a storage unit included in said card;
- storing cumulative spent sum information and permissible cumulative limit information in a storage unit; and
- calculating in a control unit included in one of said card, external terminal and host, the total of a sum spent this time and said cumulative spent sum, and, when the total exceeds said permissible cumulative limit, requesting input of a password;
**characterised by** :
- setting said permissible cumulative limit information within said entered amount of electronic money; and
- using said external terminal, allowing the user to reset said permissible cumulative limit information.

2. A process according to claim 1, comprising storing said cumulative spent sum information and said permissible cumulative limit information in a memory included in said card.

3. A process according to claim 1 or 2, comprising storing said permissible cumulative limit information in a memory included in said host.

4. A process according to claim 1, 2, or 3, wherein a microcomputer included in said card carries out said requesting input of a password.

5. A process according to claim 1, 2, 3, or 4, comprising calculating new cumulative spent sum based on said cumulative spent sum and said sum spent this time, and storing it as the cumulative spent sum.

6. A process according to claim 5, wherein when said new cumulative spent sum exceeds said permissible cumulative limit, said permissible cumulative limit is subtracted from the total of said cumulative spent sum and said sum spent this time, and stored as said new cumulative spent sum.

7. A process according to claim 5, wherein when said new cumulative spent sum exceeds said permissible cumulative limit, said cumulative spent sum is reset and stored as said new cumulative spent sum.

## Patentansprüche

1. Prozeß unter Verwendung einer Karte, eines externen Terminals und eines Hosts, bei dem die Karte, die wenigstens einen Benutzer spezifiziert, zur Abrechnung zwischen dem externen Terminal und dem Host verwendet wird, welcher Prozeß die folgenden Schritte umfaßt:
- Speichern eines eingegebenen Betrages von elektronischem Geld in einer Speichereinheit, die in der Karte enthalten ist;
- Speichern von Informationen über eine kumulative ausgegebene Summe und von Informationen über eine zulässige kumulative Grenze in einer Speichereinheit; und
- Berechnen in einer Steuereinheit, die entweder in der Karte, dem externen Terminal oder dem Host enthalten ist, des Gesamtbetrages einer diesmal ausgegebenen Summe und der kumulativen ausgegebenen Summe und, wenn der Gesamtbetrag die zulässige kumulative Grenze überschreitet, Fordern der Eingabe eines Paßwortes;
**gekennzeichnet durch**:
- das Festlegen von Informationen über die zulässige kumulative Grenze im Rahmen des eingegebenen Betrages von elektronischem Geld; und
- das Verwenden des externen Terminals, wodurch der Benutzer die Informationen über die zulässige kumulative Grenze zurücksetzen kann.

2. Prozeß nach Anspruch 1, mit dem Schritt zum Speichern der Informationen über die kumulative ausgegebene Summe und der Informationen über die zulässige kumulative Grenze in einem Speicher, der in der Karte enthalten ist.

3. Prozeß nach Anspruch 1 oder 2, mit dem Schritt zum Speichern der Informationen über die zulässige kumulative Grenze in einem Speicher, der in dem Host enthalten ist.

4. Prozeß nach Anspruch 1, 2 oder 3, bei dem ein Mikrocomputer, der in der Karte enthalten ist, das Fordern der Eingabe eines Paßwortes ausführt.

5. Prozeß nach Anspruch 1, 2, 3 oder 4, mit dem Schritt zum Berechnen einer neuen kumulativen ausgegebenen Summe auf der Basis der kumulativen ausgegebenen Summe und der diesmal ausgegebenen Summe und zum Speichern derselben als kumulative ausgegebene Summe.

6. Prozeß nach Anspruch 5, bei dem dann, wenn die neue kumulative ausgegebene Summe die zulässige kumulative Grenze überschreitet, die zulässige kumulative Grenze von dem Gesamtbetrag der kumulativen ausgegebenen Summe und der diesmal ausgegebenen Summe subtrahiert wird und als neue kumulative ausgegebene Summe gespeichert wird.

7. Prozeß nach Anspruch 5, bei dem dann, wenn die neue kumulative ausgegebene Summe die zulässige kumulative Grenze überschreitet, die kumulative ausgegebene Summe zurückgesetzt wird und als neue kumulative ausgegebene Summe gespeichert wird.

## Revendications

1. Processus utilisant une carte, un terminal extérieur et un ordinateur central, dans lequel la carte spécifiant au moins un utilisateur est utilisée en vue d'un règlement entre le terminal extérieur et l'ordinateur central, processus comprenant :
- la mise en mémoire d'une quantité entrée de monnaie électronique dans une unité de mémoire comprise dans ladite carte ;
- la mise en mémoire de l'information de somme dépensée cumulative et de l'information limite cumulative autorisée dans une unité de mémoire ; et
- le calcul dans une unité de contrôle comprise dans l'une de ladite carte, du terminal extérieur et de l'ordinateur central, du total d'une somme dépensée à cet instant et de ladite somme dépensée cumulative, et lorsque le total dépasse la limite cumulative autorisée, la demande de l'entrée d'un mot de passe ;
**caractérisé par** :
- la fixation de ladite information limite cumulative autorisée à l'intérieur de ladite quantité entrée de monnaie électronique ; et
- l'utilisation dudit terminal extérieur, en permettant à l'utilisateur de restaurer ladite information limite cumulative autorisée.

2. Processus selon la revendication 1, comprenant la mise en mémoire de ladite information de la somme dépensée cumulative et de ladite information limite cumulative autorisée dans une mémoire comprise dans ladite carte.

3. Processus selon la revendication 1 ou 2, comprenant la mise en mémoire de ladite information limite cumulative autorisée dans une mémoire comprise dans ledit ordinateur central.

4. Processus selon la revendication 1, 2 ou 3, dans lequel un microcalculateur compris dans ladite carte effectue ladite entrée demandée d'un mot de passe.

5. Processus selon la revendication 1, 2, 3 ou 4, comprenant le calcul d'une nouvelle somme dépensée cumulative en fonction de ladite somme dépensée cumulative et de ladite somme dépensée à cet instant, et à sa mémorisation en tant que somme dépensée cumulative.

6. Processus selon la revendication 5, dans lequel lorsque ladite nouvelle somme dépensée cumulative dépasse ladite limite cumulative autorisée, ladite limite cumulative autorisée est retranchée du total de ladite somme dépensée cumulative et de ladite somme dépensée à cet instant, et mémorisée en tant que ladite nouvelle somme dépensée cumulative.

7. Processus selon la revendication 5, dans lequel lorsque ladite nouvelle somme dépensée cumulative dépasse ladite limite cumulative autorisée, ladite somme dépensée cumulative est restaurée et mémorisée en tant que ladite nouvelle somme dépensée cumulative.
